# EUROPEAN PATENT APPLICATION

(11) **EP 3 018 514 A1**
(43) Date of publication of application: **11.05.2016**
(21) Application number: 14192077.7
(22) Date of filing: 06.11.2014
(51) Int. Cl.: G02B 6/44

(54) **Fiber optic management device**

(71) Applicant: CCS Technology, Inc., Wilmington, DE 19803 (US)
(72) Inventor: Ruda, Michal, 93-377 Lodz (PL); Fabrykowski, Grzegorz, 95-010 Strykow (PL); Kreczmer, Wojciech, 91-848 Lodz (PL); Schreiber, Sebastian, 13055 Berlin (DE)
(74) Representative: Sturm, Christoph

(57) **Abstract**

A fiber optic management device (10), namely routing and storage hub, for the handling of fiber optic cables, comprising: a basic body (11) having a front side (12), a rear side (13) and a cylindrical wall (14) positioned between the front side (12) and the rear side (13), wherein the outer surface of the cylindrical outer wall (14) provides a routing and storage surface for fiber optic cables; protrusions (15) extending outwardly in radial direction from the cylindrical wall (14) at the front side (12) of the basic body (11), wherein the protrusions (15) prevent the fiber optic cables from falling of the basic body (11); mounting protrusions (16, 17) positioned within an interior space defined by the cylindrical wall (14) of the basic body (11), wherein the mounting protrusions (16, 17) protrude outwardly in axial direction at the rear side (13) of the basic body (11), wherein the fiber optic management device (10) is mountable by the mounting protrusions (16, 17 to a support structure or to another fiber optic management device (10) positioned at the rear side (13) of the basic body (11).

## Description

The present patent application relates to a fiber optic management device for fiber optic cables.

When designing data transmission networks comprising optical fibers, it is necessary to handle optical fibers, especially to connect optical fibers to one another. Junctions between optical fibers can be provided by patch connections and splice connections. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

When handling optical fiber cables in a fiber optic distribution device like a street cabinet, a distribution cabinet, a distribution frame or a wall box, over-length of the fiber optic cables need to be handled. Such cable over-length can be handled at fiber optic management devices designed as routing and storage hubs. The catalog "Accessories for Fiber Optic Networks, Edition 1, page 222, Corning Cable Systems, Year 2000" discloses a routing and storage hub for a fiber optic distribution device comprising a basic body having a front side, a rear side and a cylindrical wall positioned between the front side and the rear side, wherein the outer surface of the cylindrical outer wall provides a routing and storage surface for fiber optic cables. At the rear side of the basic body the routing and storage hub is mounted to mounting structure of the fiber optic distribution device. At the front side of the basic body the routing and storage hub comprises tabs extending outwardly in radial direction from the cylindrical wall, wherein the tabs prevent the fiber optic cables from falling of the of the basic body.

The present application is based on the object to provide a novel fiber optic management device, the fiber optic management device being modular and easy to mount and dismount without the need of tools.

The fiber optic management device according to the present patent application is defined in claim 1. The fiber optic management device according to the present patent application comprises mounting protrusions positioned within an interior space defined by the cylindrical wall, wherein the mounting protrusions protrude outwardly in axial direction at the rear side of the basic body, wherein the fiber optic management device is mountable by the mounting protrusions to a support structure or to another fiber optic management device positioned at the rear side of the basic body. The fiber optic management device according to the present patent application is modular and easy to mount and dismount without the need of tools.

According to a preferred embodiment, a first mounting protrusion runs along a longitudinal center line of the basic body, wherein the first mounting protrusion has at the end which protrudes at the rear side of the basic body a rectangular shape with an undercut. At least one second mounting protrusion runs parallel to the first mounting protrusion, wherein the or each second mounting protrusion has at the end which protrudes at the rear side of the basic body a spherical shape. The mounting protrusions allow an easy mounting and dismounting of the fiber optic management device without the need of tools.

Preferably, the basic body comprises a front wall at the front side, wherein mounting openings are provided at the front wall. A first mounting opening is provided at the longitudinal center line of the basic body and is designed to receive a first mounting protrusion of a fiber optic management device positioned at the front side of the basic body, wherein the first mounting opening has a rectangular shape. In addition, at least one second mounting opening is provided at the front wall and is designed to receive a second mounting protrusion of a fiber optic management device positioned at the front side of the basic body, wherein the or each second mounting opening has preferably a round shape. The mounting protrusions allow an easy modular scaling of fiber optic management devices without the need of tools.

According to a preferred embodiment, at least one guide element and/or a snap element is provided at the front wall of the basic body, wherein the or each guide element has a shape of a circular arc segment and is designed to guide a cylindrical wall of a fiber optic management device positioned at the front side of the basic body, and wherein the snap element is designed to snap into a slot of a cylindrical wall of a fiber optic management device positioned at the front side of the basic body. These features allow an easy modular scaling of fiber optic management devices without the need of tools.

A system comprising at least two fiber optic management device is defined in claim 11 and a fiber optic distribution device comprising a support structure having an array of mounting openings and comprising at least one fiber optic management device is defined in claim 12.

Embodiments of the fiber optic management device are given in the dependent claims and the description below. Exemplary embodiments will be explained in more detail with reference to the drawing, in which:
- Figure 1a: shows a perspective front view of the fiber optic management device;
- Figure 1b: shows a front view of the fiber optic management device;
- Figure 1c: shows the detail A of Figure 1 a;
- Figure 1d: shows the detail B of Figure 1a;
- Figure 2a: shows a perspective rear view of the fiber optic management device;
- Figure 2b: shows a rear view of the fiber optic management device;
- Figure 2c: shows the detail C of Figure 2a;

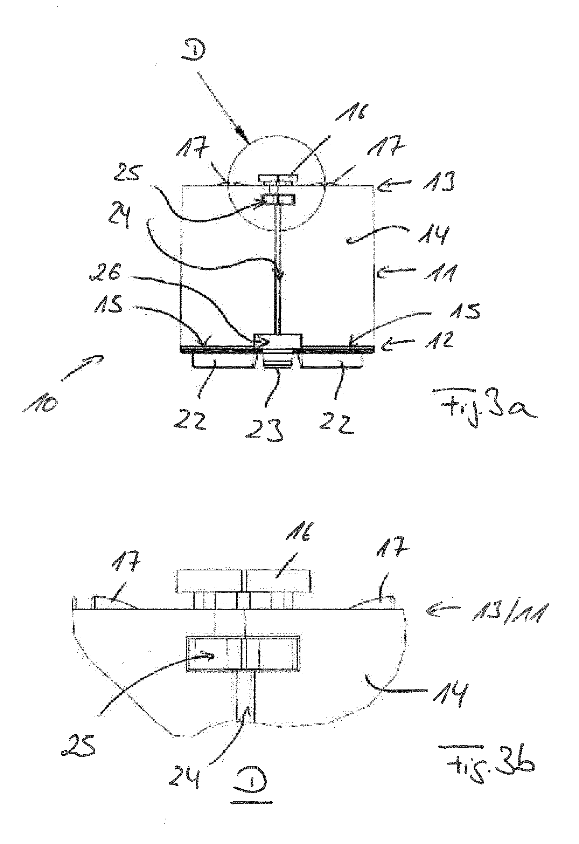

- Figure 3a: shows a top view of the fiber optic management device;
- Figure 3b: shows the detail D of Figure 3a;
- Figure 4a: shows a system of two fiber optic management devices in a first status;
- Figure 4b: shows the system of Figure 4a in a second status;
- Figure 4c: shows the system of Figure 4a in a third status;
- Figure 4d: shows a detail of Figure 4b;
- Figure 4e: shows a detail of Figure 4c;
- Figure 5a: shows a fiber optic distribution device in a first configuration; and
- Figure 5b: shows the fiber optic distribution device in a second configuration.

The present patent application relates to a fiber optic management device 10, namely to a routing and storage hub, for the handling of fiber optic cables, especially of jumper cables, within a fiber optic distribution device.

The fiber optic management device 10 comprises a basic body 11 having a front side 12, a rear side 13 and a cylindrical wall 14 positioned between the front side 12 and the rear side 13. The outer surface of the cylindrical outer wall 14 provides a routing and storage surface for fiber optic cables.

The diameter of the cylindrical outer wall 14 is adjusted to handle optical fibers taking care of the minimal bent radius of the same in order to prevent optical fibers from damages.

The fiber optic management device 10 comprises further tabs 15 extending outwardly in radial direction from the cylindrical wall 14 at the front side 12 of the basic body 11. The tabs 15 prevent the fiber optic cables from falling of the basic body 11.

The fiber optic management device 10 comprises mounting protrusions 16, 17. The mounting protrusions 16, 17 are positioned within an interior space defined by the cylindrical wall 14 of the basic body 11. The mounting protrusions 16, 17 protrude outwardly from the basic body 11 in axial direction at the rear side 13 of the basic body 11. The fiber optic management device 10 is mountable by the mounting protrusions 16, 17 to a support structure or to another fiber optic management device positioned at the rear side 13 of the basic body 11. This will be described later in greater detail.

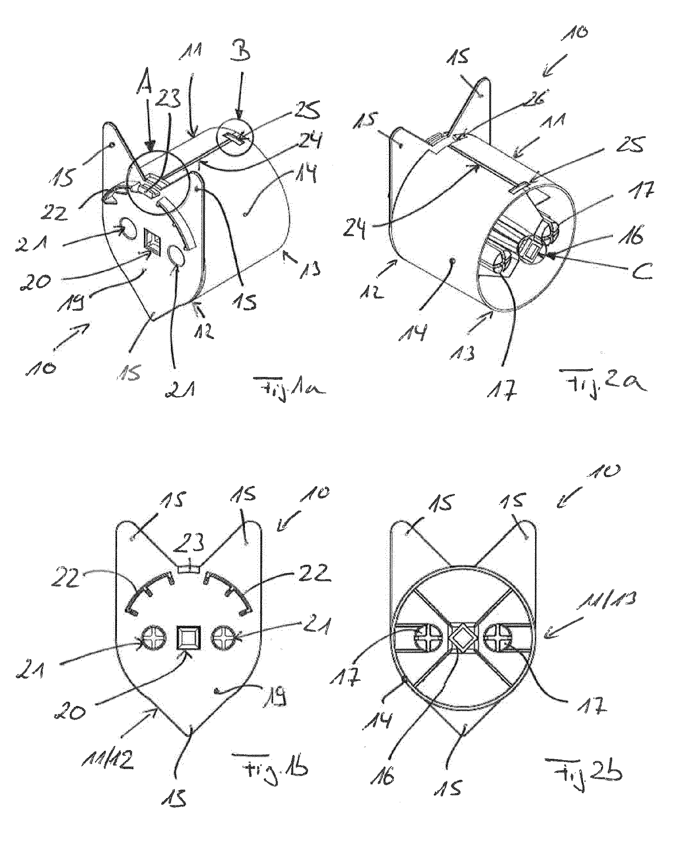

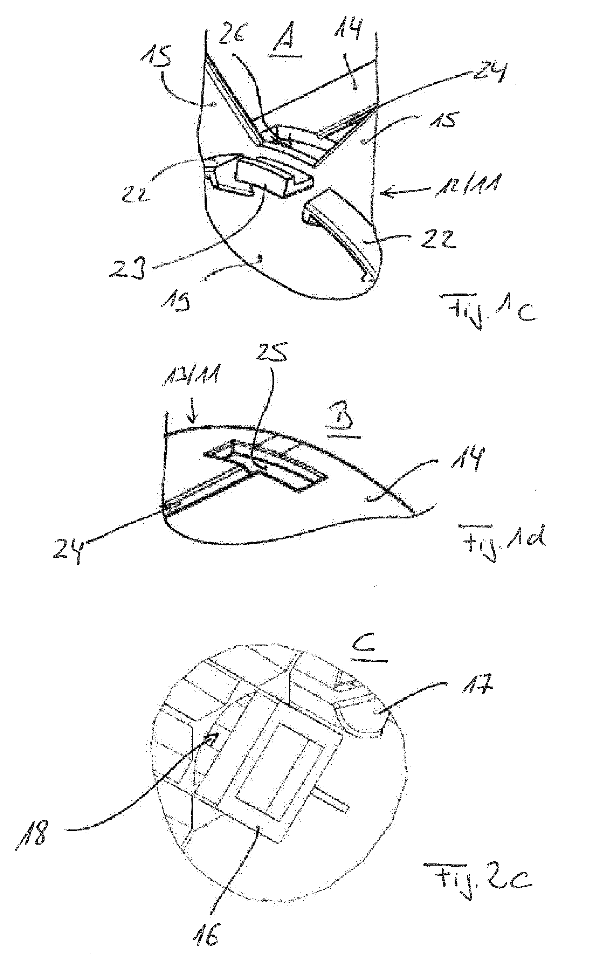

A first mounting protrusion 16 runs along a longitudinal center line of the basic body 11, wherein the first mounting protrusion 16 has at the end which protrudes at the rear side 13 of the basic body 11 a rectangular shape with an undercut 18 (see Figure 2c).

At least one second mounting protrusion 17 runs parallel to the first mounting protrusion 16, wherein the or each second mounting protrusion 17 has at the end which protrudes at the rear side 13 of the basic body 11 a spherical shape. In the shown embodiment two of such second mounting protrusions 17 are provided. As shown in Figure 2b, the mounting protrusions 16, 17 are positioned side-by-side along one line.

The basic body 11 of the fiber optic management device 10 comprises a front wall 19 at the front side 12. Mounting openings 20, 21 are provided at the front wall 19 of the basic body 11.

A first mounting opening 20 is provided at the longitudinal center line of the basic body 11 and is designed to receive a first mounting protrusion 16 of another fiber optic management device 10 positioned at the front side 12 of the basic body 11, wherein the first mounting opening 20 has a rectangular shape.

At least one second mounting opening 21 is provided and is designed to receive a second mounting protrusion 17 of the other fiber optic management device positioned at the front side 12 of the basic body 11, wherein the or each second mounting opening 21 has a round shape. In the shown embodiment two of such second mounting opening 21 are provided at the front wall 19 of the basic body 11. As shown in Figure 1b, the mounting openings 20, 21 are positioned side-by-side along one line.

The distance between the mounting openings 20, 21 positioned side-by-side on the front wall 19 corresponds to the distance between the mounting protrusions 16, 17 at the rear side of the basic body 11.

As can be best seen from Figures 1b and 2b, the orientation of the rectangular end of the first mounting protrusion 16 is angularly displaced relative to the orientation of the rectangular first mounting opening 20, preferably by an angle between 30° and 60°, most preferably by an angle of 45°.

At least one guide element 22 is provided at the front wall 19 of the basic body 11. The or each guide element 22 has a shape of a circular arc segment and is designed to guide a cylindrical wall 14 of the other fiber optic management device positioned at the front side 12 of the basic body 11. In the shown embodiment two of such guide elements 22 are provided at the front wall 19 of the basic body 11.

Further on, a snap element 23 is provided at the front wall 19 of the basic body 11. The snap element 23 is designed to snap into a slot of a cylindrical wall of the other fiber optic management device positioned at the front side 12 of the basic body 11. In the shown embodiment the snap element 23 is positioned between the two guide elements 22 provided also at the front wall 19 of the basic body 11.

The cylindrical wall 14 of the basic body 11 comprises a slot 24 running in axial direction of the basic body 11.

The cylindrical wall 14 of the basic body 11 further comprises slot 25 running in circumferential direction at the rear end 13 of the basic body 11.

The cylindrical wall 14 of the basic body 11 comprises another slot 26 running in circumferential direction at the front end 12 of the basic body 11.

In the shown embodiment both slots 25, 26 running in circumferential direction cross the slot 24 running in axial direction, namely at the ends of said slot 24. This provides a double-T-shaped slot configuration at the cylindrical wall 14 of the basic body 11.

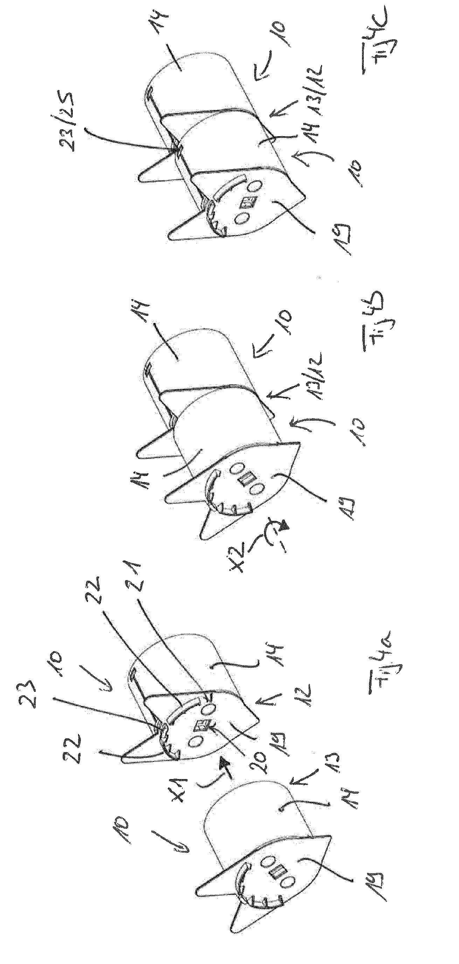

Figures 4a to 4e disclose details when providing a system of two connected fiber optic management devices 10. First, when connecting the two fiber optic management devices 10, the unconnected devices 10 are rotated with respect to each other (see Figure 4a), namely by an angle corresponding to the above described angle by which the orientation of the rectangular end of the first mounting protrusion 16 is angularly displaced relative to the orientation of the rectangular first mounting opening 20.

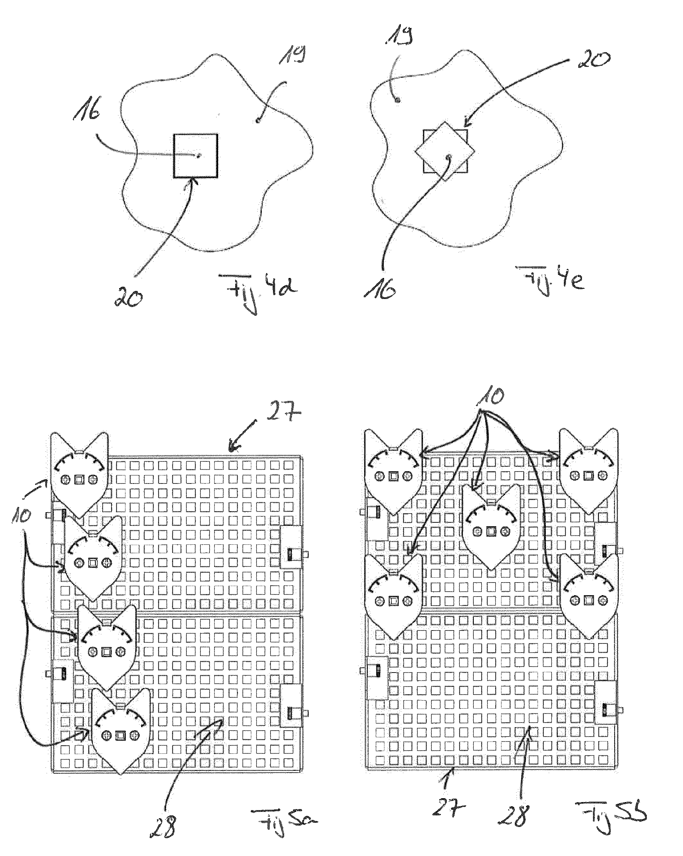

In this relative orientation the rectangular end of the first mounting protrusion 16 of the front fiber optic management device 10 can be inserted into the rectangular first mounting opening 20 of the rear fiber optic management device 10, e.g. by moving the front fiber optic management device 10 along the direction X1 so that the fiber optic management devices 10 are then in the status shown in Figure 4b, 4d.

After the rectangular end of the first mounting protrusion 16 of the front fiber optic management device 10 has been inserted into the rectangular first mounting opening 20 of the rear fiber optic management device 10, the two fiber optic management device 10 can be rotated with respect to each other along the direction X2, so that that the fiber optic management devices 10 are then in the status shown in Figure 4c, 4e. The undercut 18 provided adjacent to the rectangular end of the first mounting protrusion 16 of the front fiber optic management device 10 allows to rotate the fiber optic management devices 10 relative to each other after said rectangular end of the first mounting protrusion 16 of the front fiber optic management device 10 has been completely inserted into to rectangular first mounting opening 20 of the rear fiber optic management device 10.

The guide elements 22 provided at the front wall 19 of the basic body 11 of the rear fiber optic management device 10 are inserted into the interior space defined with the cylindrical wall 14 of the basic body 11 of the front fiber optic management device 10, whereby said guide elements 22 contact the inner surface of said cylindrical wall 14 and thereby guide and support the front fiber optic management device 10 when connecting the same to the rear fiber optic management device 10.

When the fiber optic management devices 10 become transferred from the status of Figure 4b, 4d into the status of Figure 4e, 4f by rotating the same relative to each other, the spherical shaped ends of the second mounting protrusions 17 of the front fiber optic management device 10 slide over the front wall 19 of the rear fiber optic management device 10, and finally said spherical shaped ends of the second mounting protrusions 17 of the front fiber optic management device 10 enter into the round mounting openings 21 of the rear fiber optic management device 10.

Further on, when the fiber optic management devices 10 become transferred from the status of Figure 4b, 4d into the status of Figure 4e, 4f by rotating the same relative to each other, the snap element provided at the front wall 19 of the rear fiber optic management device 10 snaps into the slot 25 running in circumferential direction at the rear end 13 of the basic body 11 of the front fiber optic management device 10.

The system of fiber optic management devices 10 is modular and freely scalable by freely choosing the number of fiber optic management devices 10 that become connected to each other in one row or line as described above for the two fiber optic management devices 10 shown in Figures 4a to 4c.

At least one fiber optic management device 10 or at least one system comprising connected fiber optic management devices 10 can be attached to a support structure 27 having an array of mounting openings 28 as shown in Figures 5a, 5b. When mounting a fiber optic management device 10 or a system comprising connected fiber optic management devices 10 to such a support structure, the rectangular end of the first mounting protrusion 16 of the respective fiber optic management device 10 acts together with one of the mounting openings of the array of mounting openings 28, and the spherical shaped ends of the second mounting protrusions 17 of the respective fiber optic management device 10 act together with other mounting opening of the array of mounting opening 28.

As described above, the fiber optic management device 10 according to the present application is a piece of hardware that is applicable with any fiber optic distribution device that requires management of fiber optic cables like of jumper cables. The fiber optic management device 10 provides modularity, flexibility and easiness of use.

The fiber optic management device 10 can be installed on any flat surface having pattern of mounting openings that correspond to the fixing geometries of the mounting protrusions 16, 17. That installation works without any tools.

The fiber optic management device 10 allows for stacking one on another on the same basis. When fiber optic management devices 10 are stacked, the same provide several compartments for the handling of fiber optic cables like of jumper cables.

The fiber optic management device 10 has a basic body 11 with a cylindrical wall 14. Tabs 15 at the front end 12 prevent fiber optic cables from falling of the basic body 11.

On the front wall 19 of the fiber optic management device 10 there are mounting openings 20, 21. Two of them are round and one of them is rectangular. On the rear side 13 of basic body 11 there are corresponding mounting protrusions 16, 17. Two of them are spherical round and one of them is rectangular.

The round mounting openings 21 and the round mounting protrusion 17 are used to position fiber optic management devices 10 with respect to each other or at a support structure 27. Ends of the mounting protrusion 17 that protrude slightly out of the cylinder basic body 11 enter into the corresponding round mounting holes 21 of another fiber optic management devices 10 or into mounting holes of the support structure 27 to provide final alignment.

The rectangular mounting protrusion 16 provides together with a mounting opening 20 a locking mechanism. The angular position of the mounting opening 20 on the front wall 19 versus the protruding end of rectangular mounting protrusion 16 on the rear side 13 is preferably 45°.

There is the undercut 18 below the corners of the protruding rectangular end of the mounting protrusion 16 on the level of cylindrical wall 14. In order to attach a fiber optic management device 10 to another fiber optic management device 10 the protruding rectangular end of the mounting protrusion 16 becomes inserted into the rectangular mounting opening 20 and then rotated by 45°.

There is another locking mechanism provided by the snap element 23 and the slot 25. On the front wall 19 of the fiber optic management device there is the snap element 23, while on the rear side of the cylindrical wall 14 there is the slot 25.

Once fiber optic management devices 10 are stacked one on another, the snap element 23 goes into the slot 25 and prevents that a gap is created in between fiber optic management devices 10. That might happen when a stack of fiber optic management devices 10 is loaded with fiber optic cables.

The fiber optic management device 10 provides an easy and fast method to attach fiber optic management devices 10 together and/or to another fiber optic management device 10.

### List of reference numerals

- 10: fiber optic management device
- 11: basic body
- 12: front side
- 13: rear side
- 14: cylindrical wall
- 15: tab
- 16: mounting protrusion
- 17: mounting protrusion
- 18: undercut
- 19: front wall
- 20: mounting opening
- 21: mounting opening
- 22: guide element
- 23: snap element
- 24: slot
- 25: slot
- 26: slot
- 27: support structure
- 28: array of mounting openings

## Claims

1. A fiber optic management device (10), namely routing and storage hub, for the handling of fiber optic cables, comprising:
a basic body (11) having a front side (12), a rear side (13) and a cylindrical wall (14) positioned between the front side (12) and the rear side (13), wherein the outer surface of the cylindrical outer wall (14) provides a routing and storage surface for fiber optic cables;
tabs (15) extending outwardly in radial direction from the cylindrical wall (14) at the front side (12) of the basic body (11), wherein the tabs (15) prevent the fiber optic cables from falling of the basic body (11);
**characterized by**
mounting protrusions (16, 17) positioned within an interior space defined by the cylindrical wall (14) of the basic body (11), wherein the mounting protrusions (16, 17) protrude outwardly in axial direction at the rear side (13) of the basic body (11), wherein the fiber optic management device (10) is mountable by the mounting protrusions (16, 17) to a support structure or to another fiber optic management device (10) positioned at the rear side (13) of the basic body (11).

2. The fiber optic management device of claim 1, **characterized in that** a first mounting protrusion (16) runs along a longitudinal center line of the basic body (11), wherein the first mounting protrusion (16) has at the end which protrudes at the rear side (13) of the basic body (11) a rectangular shape with an undercut (18).

3. The fiber optic management device of claim 2, **characterized in that** at least one second mounting protrusion (17) runs parallel to the first mounting protrusion (16), wherein the or each second mounting protrusion (17) has at the end which protrudes at the rear side (13) of the basic body (11) a spherical shape.

4. The fiber optic management device of one of claims 1 to 3, **characterized in that** the basic body (11) comprises a front wall (19) at the front side (12), wherein mounting openings (20, 21) are provided at the front wall (19).

5. The fiber optic management device of claim 4, **characterized in that** a first mounting opening (20) is provided at the longitudinal center line of the basic body (11) and is designed to receive a first mounting protrusion (16) of another fiber optic management device positioned at the front side (12) of the basic body (11), wherein the first mounting opening (20) has a rectangular shape.

6. The fiber optic management device of claim 5, **characterized in that** at least one second mounting opening (21) is provided and is designed to receive a second mounting protrusion (17) of the other fiber optic management device positioned at the front side (12) of the basic body (11), wherein the or each second mounting opening (21) has preferably a round shape.

7. The fiber optic management device of one of claims 4 to 6, **characterized in that** at least one guide element (22) is provided at the front wall (19) of the basic body (11), the or each guide element (22) having a shape of a circular arc segment and being designed to guide a cylindrical wall (14) of another fiber optic management device positioned at the front side (12) of the basic body (11).

8. The fiber optic management device of one of claims 4 to 7, **characterized in that** a snap element (23) is provided at the front wall (19) of the basic body (11), the snap element (23) being designed to snap into a slot of a cylindrical wall (14) of another fiber optic management device positioned at the front side (12) of the basic body (11).

9. The fiber optic management device of one of claims 1 to 8, **characterized in that** the cylindrical wall (14) comprises a slot (24) running in axial direction of the basic body.

10. The fiber optic management device of one of claims 1 to 9, **characterized in that** the cylindrical wall (14) comprises a slot (25) running in circumferential direction at the rear end (13) of the basic body (11).

11. A system comprising at least two fiber optic management devices (10) of one of claims 1 to 10.

12. A fiber optic distribution device comprising a support structure (27) having an array of mounting openings (28) and at least one fiber optic management device (10) of one of claims 1 to 10.
